Europäisches Patentamt

European Patent Office

Office européen des brevets

(11) Veröffentlichungsnummer: **0 193 105**
**A2**

(12) **EUROPÄISCHE PATENTANMELDUNG**

(21) Anmeldenummer: **86102169.9**

(22) Anmeldetag: **19.02.86**

(51) Int. Cl.⁴: **G06F 13/12**

(30) Priorität: **25.02.85 US 705458**

(43) Veröffentlichungstag der Anmeldung:
**03.09.86 Patentblatt 86/36**

(84) Benannte Vertragsstaaten:
**CH DE FR GB IT LI NL SE**

(71) Anmelder: **International Standard Electric Corporation**
**320 Park Avenue**
**New York New York 10022(US)**

(72) Erfinder: **Gerety, Eugene Peter**
**18 Longmeadow Drive**
**Wolcott, CT 06716(US)**
Erfinder: **Vij, Jitender Kumar**
**353 Putting Green Road**
**Trumbull, CT 06611(US)**

(74) Vertreter: **Villinger, Bernhard, Dipl.-Ing. et al**
**Standard Elektrik Lorenz AG Patent- und**
**Lizenzwesen Postfach 300 929 Kurze Strasse 8**
**D-7000 Stuttgart 30(DE)**

(54) **Geräteanschlussschaltung.**

㉗ Zum Austauschen von Daten zwischen einer Vielzahl von peripheren Endgeräten (60) und einem Speicher (30), gesteuert durch einen Mikrocomputer (18), weist eine Geräteschnittstelle (12), eine Speicher-und eine Mikrocomputerschnittstelle (16), eine geräteunabhängige und eine gerätespezifische Programmspeichereinheit (20) bzw. (22) und einen Mikroprozessor (24) auf.

Die Geräteschnittstelle (12) ist mit einem Gerätebus - (14) verbunden, an den die peripheren Endgeräte (60) anschließbar sind. Die Speicher-und Mikrocomputerschnittstelle (16) ist über eine Adressen-/Datenleitung (52) mit dem Speicher (30) und über eine Unterbrechungsanforderungsleitung - (42) sowie eine Kanalabrufleitung (44) mit dem Mikroprozessor (24) verbunden. Dabei erfolgt der Zugriff auf die peripheren Endgeräte (60) gemäß den abgelegten geräteunabhängigen und gerätespezifischen Programmen, wobei der Mikroprozessor (24) die Datenübertragung über die Geräteanschlußschaltung (10) zwischen den Schnittstellen - (12 und 16) steuert.

FIG. 1

Geräteanschlußschaltung

Die Erfindung betrifft eine Geräteanschlußschaltung zum zweiseitig gerichteten durch einen Mikrocomputer gesteuerten Datenaustausch zwischen einer Vielzahl von peripheren Endgeräten und einem Speicher.

Beim Austausch von Daten besteht eine Hauptaufgabe darin, die Vielzahl von peripheren Endgeräten richtig ansteuern zu können. Diese Aufgabe stellt sich nicht nur wegen der großen Anzahl unterschiedlicher Endgeräte, wie Drucker, Eingabetastaturen usw., sondern auch wegen der unterschiedlichen Arbeitsgeschwindigkeiten und unterschiedlicher Herstellspezifikationen. Weiter sind die meisten Mikroprozessoren nicht in der Lage einen direkten Datenaustausch mit einem peripheren Endgerät durchzuführen. Sie benötigen hierzu eine entsprechende Schnittstellenschaltung, um einen Datenaustausch zu ermöglichen. Eine übliche Lösung besteht darin eine Schnittstellenschaltung vorzusehen, die einen Befehlsatz enthält, d.h. ein einem speziellen Endgerät zugeordnetes Steuerprogramm. Zusätzlich ist ein Direktzugriffsspeicher zwischen der Schnittstellenschaltung und dem Mikroprozessor erforderlich. Im Betrieb überträgt der Mikroprozessor ein Informationsbit in den Direktzugriffsspeicher und dann zur Schnittstellenschaltung. Das Endgerät wird nun mit dem speziellen Programm angesteuert, um die Information zu erhalten. Nach erfolgtem Informationsaustausch schaltet die Schnittstellenschaltung den Direktzugriffsspeicher in den Ruhezustand, um die nächste zu übertragende Information aufnehmen zu können. Dieser Übertragungsablauf ist sehr langsam und unwirtschaftlich.

Weitere Systeme enthalten erweiterete Register, in die größere Informationsmengen geladen werden können, die sodann über die Schnittstellenschaltung zum Endgerät übertragen werden. Dies ergibt im wesentlichen einen Zeitgewinn zwischen zwei Unterbrechungsanforderungen vom Speicher zum Mikroprozessor.

Weiterhin müssen die meisten Systeme zusätzlich Informationen zwischen dem Mikroprozessor und dem Direktzugriffsspeicher über einen internen Bus austauschen, über den auch die zu übertragenden Informationen gesendet werden. Somit besteht für den Mikroprozessor keine zufriedenstellende Zugriffsmöglichkeit auf den internen Bus, um eine Steuerung von mehr als einem Endgerät gleichzeitig durchführen zu können.

Eine Lösung dieses Problems besteht darin, einen weiteren Befehlsatz unabhängig vom Mikroprozessor für die Schnittstellenschaltung vorzusehen. Dadurch werden einige ursprünglich dem Mikroprozessor zugeordnete Funktionen umverteilt und die Geschwindigkeit erhöht. Durch den zusätzlichen Befehlssatz, der normalerweise im Direktzugriffsspeicher abgelegt wird, wird dessen Kapazität verringert, wodurch die Datendurchsatzrate ebenfalls verringert wird.

Ein weiterer zu berücksichtigender Punkt von üblichen Schnittstellenschaltungen ist der, daß spezifische Steuerbefehle für jedes periphere Endgerät benötigt werden. Legt man ein entsprechendes spezifisches Programm für die Endgeräte im Direktzugriffsspeicher ab, wird der Mikroprozessor weiter entlastet. Natürlich wird die Speicherkapäzität des Direktzugriffsspeichers dadurch weiterhin erheblich reduziert. Somit wird die Anzahl der gleichzeitig anschließbaren Endgeräte durch vier nachteilige Zustände bestimmt. Dies sind Buswartezeit, Busbelegungszeit, Unterbrechungswartezeit und Unterbrechungsausführungszeit.

Die Buswartezeit ergibt sich aufgrund kritischer Antwortbedingungen einiger Endgeräte. Dies wird häufig durch eine Doppelzwischenspeicherung mittels eines Fifospeichersystems gelöst, ist jedoch aufwendig und teuer.

Die Busbelegungszeit steigt dann an, wenn die Menge der auszutauschenden Informationen ansteigen, so daß ein wesentlicher Teil der Busbandbreite benötigt wird, wodurch die Rechnerkapazität des Mikroprozessor verringert wird. Eine Lösung dieses Problems besteht darin, die Belastung durch den Informationsaustausch auf mehrere Mikroprozessoren zu verteilen sowie schnellere Mikroprozessoren einzuführen. Beide Lösungen sind sehr teuer.

Unterbrechungswartezeit entsteht beim Ausführen eines vollständigen Informationsaustausches zwischen der Schnittstellenschaltung und einem Endgerät, bei gleichzeitiger Unterbrechungsanforderung für weitere Daten, Befehle usw. Die Zeit, die der Mikroprozessor benötigt auf eine solche Unterbrechungsanforderung zu antworten, kann unter Umständen kritisch sein. Obwohl heutige Mikroprozessoren sehr schnell antworten können, verursacht eine häufige Unterbrechungsanforderung Verzögerungen, wobei der Mikroprozessor schnell überlastet wird.

Die Unterbrechungsausführungszeit hängt mit der Unterbrechungswartezeit zusammen. Sogar eine Unterbrechungszeit von nur einer Millisekunde stellt noch eine sehr langsame Antwort dar. Die Unterbrechungszeit von z.B. miminmal einer Millisekunde stammt daher, daß nach dem der Mikroprozessor eine Unterbrechungsanforderung beantwortet hat, diese Anfrage noch ausgeführt werden muß.

Die technische Aufgabe nach der Erfindung besteht darin eine Geräteanschlußschaltung zu realisieren, die die Belastung des Mikrocomputers wesentlich reduziert und eine Vielzahl von peripheren Endgeräten bedienen kann.

Eine Lösung dieser Aufgabe erfolgt mit den in Anspruch 1 angegebenen Mitteln.

Weitere vorteilhafte Ausgestaltungen des Gegenstandes der Erfindung sind den Unteransprüchen zu entnehmen.

Ein Ausführungsbeispiel wird im folgenden anhand der Zeichnung erläutert. Es zeigen.

Figur 1 ein Blockschaltbild einer Einrichtung, die die erfindungsgemäße Geräteanschlußschaltung enthält und

Figur 2 ein detailiertes Blockschaltbild der erfindungsgemäßen Geräteanschlußschaltung, wie sie in der Einrichtung nach Figur 1 enthalten ist.

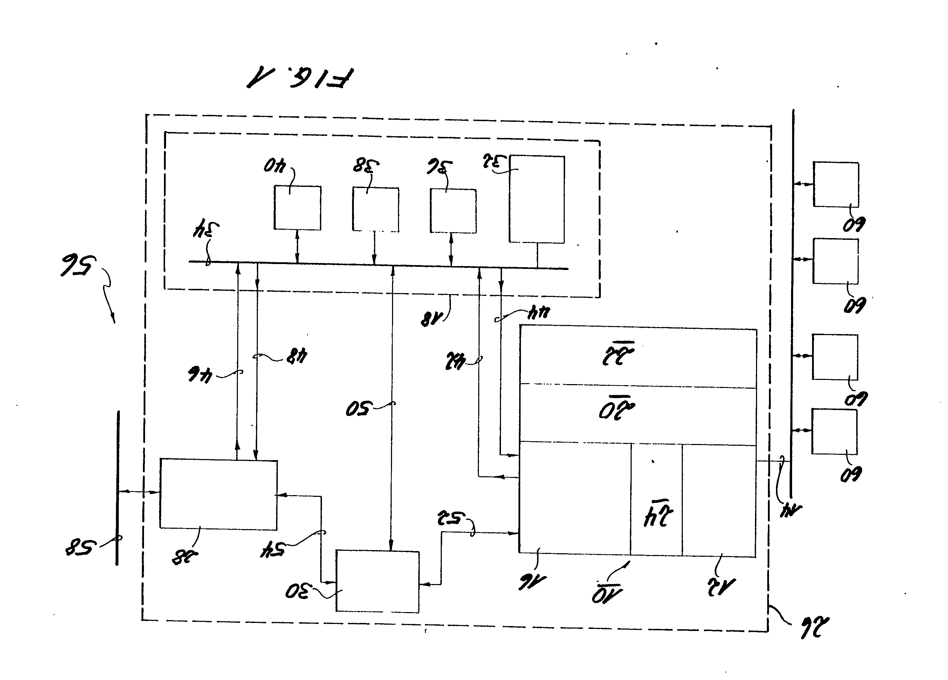

Eine erfindungsgemäße Geräteanschlußschaltung 10, wie in Figur 1 mit 10 bezeichnet, enthält eine Geräteanschlußstelle 12 zum Herstellen einer Verbindung mit einem Gerätebus 14, eine Speicher-und Mikrocomputerschnittstelle zum Herstellen einer Verbindung mit einem Mikrocomputer 18 bzw. einem Speicher 30, eine geräteunabhängige Programmspeichereinheit 20, eine gerätespezifische Programmspeichereinheit 22 und ein zugeordneter Mikroprozessor 24.

Die Geräteanschlußschaltung 10 ist in einer bevorzugten Ausführung integrales Bestandteil eines Schnittstellenbausteins 26. Der Schnittstellenbaustein 26 enthält eine Busanschlußschaltung 28, den Speicher 30 und den Mikroprozessor 32, der über einen internen Bus 34 mit einem Speicher mit wahlfreiem Zugriff 36 -im folgenden RAM36 genannt -mit einem Festspeicher 38 -im folgenden ROM38 genannt -und einem Programmspeicher für interne Dienste 40 verbunden ist.

Die Geräteanschlußschaltung 10 ist über eine Unterbrechungsanforderungsleitung 42 mit dem Mikrocomputer 18 verbunden, um zum Mikrocomputer 18 Unterbrechungsanforderungssignale zu übertragen. Um Kanalabrufsignale vom Mikrocomputer 18 zur Geräteanschlußschaltung 10 zu übertragen, ist diese über eine Kanalabrufleitung 44 mit dem Mikrocomputer 18 verbunden.

Entsprechend dem zuvor Beschriebenen ist ein direkter Nachrichtenaustausch zwischen der Busanschlußschaltung 28 und dem Mikrocomputer 18 begrenzt auf Unterbrechungsanforderungs-und Kanalabrufsignale über eine weitere Unterbrechungsanforderungsleitung 46 bzw. eine weitere Kanalabrufleitung 48.

Der Mikrocomputer 18 ist über einen Bus 50 zum zweiseitig gerichteten Übertragen von Adressen, Daten und Steuersignalen mit dem Speicher 30 verbunden. Außerdem sind die Geräteanschlußschaltung 10 und die Busanschlußschaltung 28 mit dem Speicher 30 über eine Adressen-/Datenleitung 52 bzw. eine weitere Adressen-/Datenleitung 54 verbunden.

Die Geräteanschlußleitung 10 des Schnittstellenbausteins 26, wie in Figur 1 gezeigt, beinhaltet die wesentlichen Funktionen einer Schnittstellenbaugruppe für Sprach-und Datendienste 56. Dabei sind eine Mehrzahl solcher Schnittstellenbaugruppen 56 über die jeweilige Busanschlußschaltung 28 an einen gemeinsamen Bus 58 anschließbar.

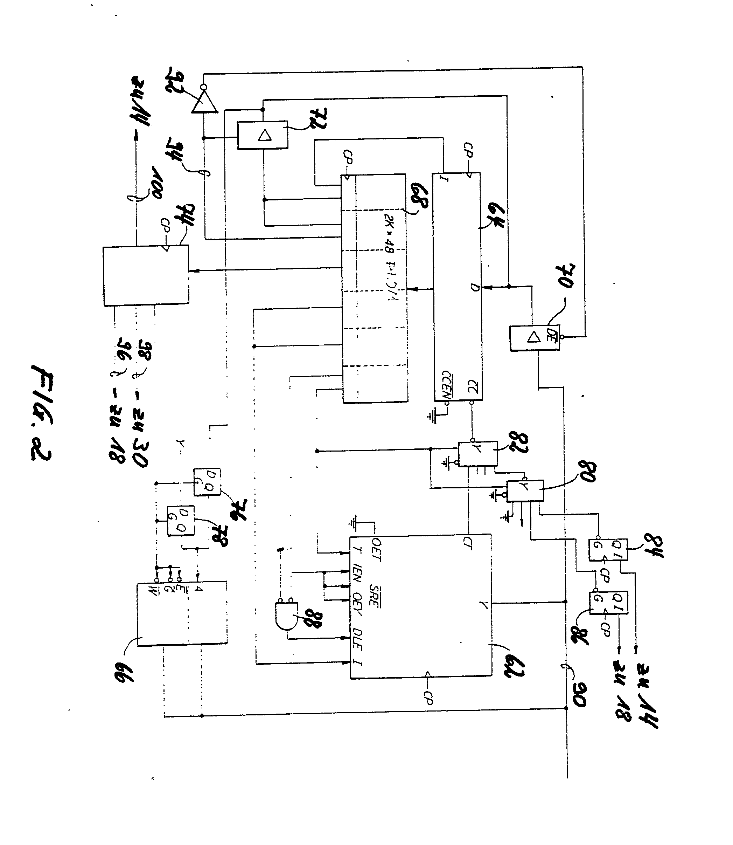

Ein detailiertes Blockschaltbild der Geräteanschlußschaltung 10 ist in Figur 2 dargestellt. Die Geräteanschlußschaltung 10 enthält ein Rechen-und Steuerwerk (ALU)62, eine Mikroprogrammablaufsteuerung 64, einen Notizblockspeicher 66 und eine programmierbare Festspeicherbank 68. Ferner enthält die Geräteanschlußschaltung 10 einen ersten und einen zweiten Tristate-Pufferspeicher 70 bzw. 72, eine Dekodier-und Signalspeicherlogik 74, einen ersten und einen zweiten Adressenspeicher 76 bzw. 78, einen ersten und einen zweiten Multiplexer 80 bzw. 82 und ein erstes und ein zweites Flipflop 84 bzw. 86. Ferner ist ein Gatter 88 mit dem Rechen-und Steuerwerk 62 und der programmierbaren Festspeicherbank 68 verbunden, dessen einer Eingang an einen externen Taktgeber (nicht gezeigt) angeschlossen ist.

Der Mikroprozessor 24 der Geräteanschlußschaltung 10 setzt sich aus dem Rechen-und Steuerwerk (ALU) 62, der Mikroprogrammablaufsteuerung 64, dem Notizblockspeicher 66 und dem ersten und zweiten Adressenspeicher 76 bzw. 78 zusammen. Die programmierbare Festspeicherbank 68 bildet die geräteunabhängige und die gerätespezifische Programmspeichereinheit 20 bzw. 22. Die programmierbare Festspeicherbank 68 ist über einen Adressen-/Datenbus 90 mit dem Rechen-und Steuerwerk 62 und der Mikroprogrammablaufsteuerung 64 verbunden. Weiterhin ist der erste Tristate-Pufferspeicher 70 in den Adressen-/Datenbus 90 zwischen die Festspeicherbank 68 und die Mikroprogrammablaufsteuerung 64 eingesetzt. Der zweite Tristate-Pufferspeicher 72 ist zwischen Ausgänge der Festspeicherbank 68 und einem Dateneingang D der Mikroprogrammablaufsteuerung 64 geschaltet. Ein Inverter 92 ist zum ausschließlichen Freigeben des ersten 70 oder des zweiten Tristate-Pufferspeichers 72 zwischen deren Freigabeeingänge geschaltet.

Ferner setzt sich die Geräteschnittstelle 12 aus dem ersten Flipflop 84, dem ersten und zweiten Multiplexer 80, 82 und der Dekodier-und Signalspeicherlogik 74 zusammen. Das erste Flipflop 84 ist einerseits mit dem Gerätebus 14 und andererseits mit dem ersten Multiplexer 80 verbunden, wobei der erste Multiplexer 80 und der zweite Multiplexer 82 untereinander, mit dem Rechen-und Steuerwerk 62 und der zweite Multiplexer 82 mit der Mikroprogrammablaufsteuerung 64 verbunden sind. Die Dekodier-und Signalspeicherlogik 74 ist mit der geräteunabhängigen 20 und der gerätespezifischen Programmspeichereinheit 22, d.h. der Festspeicherbank 68 verbunden.

Das zweite Flipflop 86, der Multiplexer 80, 82 und die Dekodier-und Signalspeicherlogik 74 bilden die Speicher-und Mikrocomputerschnittstelle 16. Das zweite Flipflop 86 ist einerseits mit der Kanalabrufleitung 44 und andererseits mit dem ersten Multiplexer 80 verbunden. Außerdem ist die Dekodier-und Signalspeicherlogik 74 mit dem Speicher 30 und dem Mikrocomputer 18 verbunden. Dabei überträgt die der Geräteschnittstelle 12 und der Speicher-und Mikrocomputerschnittstelle 16 zugeordnete Dekodier-und Signalspeicherlogik 74, die auch mit dem Notizblockspeicher 66 verbunden ist, Freigabesignale zum dem Gerätebus 14, an den eine Mehrzahl von peripheren Endgeräten 60 anschließbar sind, über die Adressen-/Datenleitungen 52 zu dem Speicher 30 und zu dem Notizblockspeicher 66. Der Adressen-/Datenbus 90 wird somit gemeinsam von der Geräteschnittstelle 12 und der Speicher-und Mikrocomputerschnittstelle 16 benutzt.

Im Betrieb führt die Geräteanschlußschaltung 10 gesteuert durch den Mikrocomputer 18 den Datenaustausch zwischen dem Speicher 30 und den peripheren Endgeräten 60 durch.

Für die folgende Beschreibung des allgemeinen Betriebsablaufes der Geräteanschlußschaltung 10, wird von einem Ruhezustand der Geräteanschlußschaltung 10 ausgegangen. In diesem Ruhezustand werden der Gerätebus 14 und die Kanalabrufleitung 44 durch den Mikroprozessor 24 überwacht, um feststellen zu können, ob ein peripheres Endgerät 60 oder der Mikrocomputer 18 Daten über die Geräteanschlußleitung 10 übertragen will.

Der Betriebszustand des Gerätebusses 14 und der Kanalabrufleitung 44 wird dabei durch das erste Flipflop 84 bzw. das zweite Flipflop 86 überwacht. Die Ausgänge der Flipflops 84, 86 sind mit dem ersten und zweiten Multiplexer 80 und 82 verbunden, die das Rechen-und Steuerwerk 62 und die Mikroprogrammablaufsteuerung 64 untereinander verbinden. In dieser Weise überwacht der Mikroprozessor 24 die Betriebszustände des Gerätebusses 14 und der Kanalabrufleitung 44, in dem fortlaufend die Ausgänge der beiden Multiplexer 80 und 82 geprüft werden. Somit sind der Betriebszustand der extern angeschlossenen peripheren Endgeräte 60 und des Mikrocomputers 18 jederzeit dem Mikroprozessor 24 bekannt.

Für die folgende Beschreibung wird angenommen, daß Daten zu einem der peripheren Endgeräte 60 übertragen werden, die im Speicher 30 abgespeichert und entweder von dem Mikrocomputer 18 oder der Busanschlußschaltung 28 kommen. Der Mikrocomputer 18 steuert und überwacht den Speicher und die Busanschlußschaltung 28 sowie die Geräteanschlußschaltung 10 und legt ein Kanalabrufsignal, z.B. ein binärer Pegelwechsel, über die Kanalabrufleitung 44 auf das zweite Flipflop 86 der Speicher-und Mikrocomputerschnittstelle 16 an. Nachdem die Mikroprogrammablaufsteuerung 64 diesen Betriebszustand erkannt hat, veranlaßt sie das Senden eines Freigabesignales zum Speicher 30 und startet die Datenübertragung vom Speicher 30 zum Notizblockspeicher 66.

Die im Notizblockspeicher 66 abgelegten Daten werden dann, falls erforderlich, durch das Rechen-und Steuerwerk 62 umgearbeitet und die Arbeitsvorschrift wird in der programmierbaren Festspeicherbank 68 abgelegt. Die Arbeitsvorschrift bezeichnet genau das periphere Endgerät 60, zu dem die Daten gesendet werden sollen. Zunächst werden die in der geräteunabhängigen Programmspeichereinheit 20 der programmierbaren Festspeicherbank 68 abgelegten für alle peripheren Endgeräte 60 gleichen Funktionsabläufe aufgerufen. Sodann wird, abhängig von dem speziellen peripheren Endgerät 60 zu dem die Daten gesendet werden sollen, auf den Teil der gerätespezifischen Programmsteuereinheit 22, der diesem peripheren Endgerät 60 zugeordnet ist, zugegriffen und diese spezifischen Befehle von der programmierbaren Festspeicherbank 68 über den zweiten Tristate-Pufferspeicher 72 zu einem Dateneingang D der Mikroprogrammablaufsteuerung 64 übertragen. Der erste und der zweite Tristate-Pufferspeicher 70, 72 sind funktionell gegenseitig ausgeschlossen. Somit können Befehle zur Mikroprogrammablaufsteuerung 64 entweder von dem Adressen-/Datenbus 90 oder von der programmierbaren Festspeicherbank 28 aus übertragen werden. Dieser sich gegenseitig ausschließende Betriebsablauf wird durch einen in eine Freigabeleitung 94 zwischen die Freigabeeingänge des zweiten Tristate-Pufferspeichers 72 und des ersten Tristate-Pufferspeichers 70 geschalteten Inverters 92 sichergestellt. Wenn also einer der Tristate-Pufferspeicher 70 oder 72 freigegeben wird, wird durch das invertierte Freigabesignal, das über den Inverter 92 an dem Freigabeeingang des anderen Tristate-Pufferspeicher 70 oder 72 anliegt, immer nur ein Tristate-Pufferspeicher 70 oder 72 freigegeben.

Die Mikroprogrammablaufsteuerung 64 überträgt nun, nach Erhalt der für das bestimmte Endgerät 60 spezifischen und der geräteunabhängigen Befehle, vom Notizblockspeicher 66 über den Adressen-/Datenbus 90 Daten zum adressierten Endgerät 60. Wenn die dem Endgerät 60 zugeordneten spezifischen Befehle der Mikroprogrammablaufsteuerung 64 bekannt sind, kann der tatsächliche Datenaustausch zwischen dem Speicher 30 und dem Endgerät 60 direkt, ohne daß weitere Befehle notwendig sind, erfolgen. Fortan werden weitere über den Adressen-/Datenbus 90 empfangene Daten, die falls notwendig durch das Rechen-und Steuerwerk 62 umgearbeitet und auf den Adressen-/Datenbus 90 zurückgegeben werden, direkt über den Adressen-/Datenbus 90 zu dem Endgerät 60 gesendet.

Nach vollständiger Übertragung der in dem Speicher 30 abgespeicherten Daten, wird ein Unterbrechungssignal über eine Unterbrechungsanforderungsleitung 96 der Dekodier-und Signalspeicherlogik 74 zum Mikrocomputer 18 abgesetzt.

Für einen Datenaustausch in umgekehrter Richtung, d.h. von einem Endgerät 60 zu dem Speicher 30, erfolgt der Daten-und Befehlsfluß entsprechend umgekehrt dem zuvor beschriebenen Beispiel.

Ein besonderer Vorteil der vorliegenden Geräteanschlußschaltung 10 besteht darin, daß die geräteunabhängige Programmspeichereinheit 20 alle Befehle enthält die die für alle an den Gerätebus 14 angeschlossenen Endgeräte 60 gemeinsam sind. Somit muß die gerätespezifische Programmspeichereinheit 22 nur noch die Befehle enthalten, die spezifisch für die einzelnen Endgeräte 60 sind. Z.B. kann die geräteunabhängige Programmspeichereinheit 20 alle allgemeinen Schreib-und Lesebefehle für alle Endgeräte 60 enthalten. Da es jedoch sinnlos wäre Schreibbefehle oder Daten an eine Tastatur zu senden, löscht das Programm der gerätespezifische Programmspeichereinheit 22 alle solche Schreibbefehle. Genauso enthält das Programm der gerätespezifischen Programmspeichereinheit 22 keine Lesebefehle für z.B. einen Drucker. Zusätzlich ist jede den peripheren Endgeräten 60 zugeordnete Information in der programmierbaren Festspeicherbank 68 abgespeichert, so daß die Speicherkapazität des Speichers 30 nicht verringert wird.

Indem hier beschriebenen Ausführungsbeispiel werden alle an den Gerätebus 14 angeschlossene periphere Endgeräte 60 nach dem gleichen Datenprotokol betrieben. Dadurch kann das geräteunabhängige Programm der Speichereinheit 20 verallgemeinert werden und als Gerüst für alle Befehle und jeden Nachrichtenaustausch mit den peripheren Endgeräten 60 benutzt werden. Das gerätespezifische Programm der Speichereinheit 22 umfaßt dann nur noch die individuellen Eigenschaften der angeschlossenen peripheren Endgeräte 60. Somit benötigt die einmal installierte Schnittstellenbaugruppe für Sprach-und Datendienste 56 keine Änderungen mehr in dem gerätespezifischen Programm.

Der Notizblockspeicher 66, der zum Zwischenspeichern von Daten während einer Datenübertragung von der Geräteanschlußschaltung 10 zum Speicher 30 dient, erlaubt eine völlige Zuordnung des Speichers 30 zur Geräteanschlußschaltung 10. Falls also Daten vom Speicher 30 zur Geräteanschlußschaltung 10 übertragen werden, speichert der Notizblockspeicher 66 Daten und Adressen solange zwischen, wie das Rechen-und Steuerwerk 62 eine laufende Operation durchführt. Folglich erhält das Rechen-und Steuerwerk 62 während einer Datenübertragung einen kontinuierlichen Informationsfluß, so daß keine oder nur geringe Datenverarbeitungszeiten verloren gehen.

Die Schritt-zu-Schritt Übertragung von Informationen wird durch Freigabesignale gesteuert, die von der Dekodier-und Signalspeicherlogik 74 erzeugt und über eine Freigabeleitung 98 zum Speicher 30 und über eine weitere Freigabeleitung 100 zum Gerätebus 14 und somit zu den peripheren Endgeräten 60 übertragen werden.

Da in vorteilhafter Weise alle der peripheren Endgeräte 60 zugeordneten Befehle zum Übertragen der Daten getrennt von dem Speicher 30 abgelegt sind, wird der Mikrocomputer 18 erst nach abgeschlossener Datenübertragung zu einem peripheren Endgerät 60 unterbrochen. Somit ist der Mikrocomputer 18 entlastet und versorgt im wesentlichen den Speicher 30. Weiterhin wird durch das Aufteilen in eine geräteunabhängige und eine gerätespezifische Programmspeichereinheit 20 bzw. 22 das Steuern einer Vielzahl von peripheren Endgeräten 60 durch eine einzige Geräteanschlußschaltung 10 ermöglich, während dennoch die Unterbrechungsanforderungen zum Mikrocomputer 18 verringert werden.

Somit werden Betriebszustände, wie Buswartezeiten, Unterbrechungswartezeiten und Unterbrechungsservicezeiten bei Erhöhung der Anzahl der peripheren Endgeräte 60, die durch eine Geräteanschlußschaltung 10 gesteuert werden, im wesentlichen vermieden.

**Ansprüche**

1. Geräteanschlußschaltung (10) zum zweiseitig gerichteten, durch einen Mikrocomputer (18) gesteuerten Datenaustausch zwischen einer Vielzahl von peripheren Endgeräten (60) und einem Speicher (30), **dadurch gekennzeichnet,** daß die Geräteanschlußschaltung (10) eine Geräteschnittstelle (12), eine Speicher-und Mikrocomputerschnittstelle (16), eine geräteunabhängige (20) und eine gerätespezifische Programmspeichereinheit (22) und einen Mikroprozessor (24) aufweist, daß die Geräteschnittstelle (12) mit einem Gerätebus (14) verbunden ist, an den die peripheren Endgeräte (60) anschließbar sind, daß die Speicher-und Mikrocomputerschnittstelle (16) über eine Adressen-/Datenleitung (52) mit dem Speicher (30) und über eine Unterbrechungsanforderungsleitung (42) sowie

eine Kanalabrufleitung (44) mit dem Mikrocomputer (18) verbunden ist, daß zum Zugriff auf alle anschließbaren peripheren Endgeräte (60) alle geräteunabhängigen und alle gerätespezifischen Befehle in der geräteunabhängigen - (20) bzw. der gerätespezifischen Programmspeichereinheit (22) abgespeichert sind, und daß zur Datenübertragung über die Geräteanschlußschaltung (10) der Mikroprozessor (24) mit der Geräteschnittstelle (12) und mit der Speicher- und Mikrocomputerschnittstelle (16) verbunden ist.

2. Geräteanschlußschaltung (10) nach Anspruch 1, dadurch gekennzeichnet, daß der Mikroprozessor (24) ein Rechen- und Steuerwerk (62) und eine Mikroprogrammablaufsteuerung (64) aufweist, denen ein Notizblockspeicher (66) über einen Adressen-/Datenbus (90) zugeordnet ist.

3. Geräteanschlußschaltung (10) nach Anspruch 2, dadurch gekennzeichnet, daß die geräteunabhängige (20) und die gerätespezifische Programmspeichereinheit (22) als eine programmierbare Festspeicherbank (68) ausgebildet sind, die eine Vielzahl von programmierbaren Festspeichern enthält und daß die programmierbare Festspeicherbank - (68) über den Adressen-/Datenbus (90) mit dem Rechen- und Steuerwerk (62) und der Mikroprogrammablaufsteuerung (64) verbunden ist.

4. Geräteanschlußschaltung (10) nach Anspruch 3, dadurch gekennzeichnet, daß zum Steuern des Zugriffes auf den Adressen-/Datenbus (90) und auf Ausgänge der programmierbaren Festspeicher der Festspeicherbank (68) durch die Mikroprogrammablaufsteuerung (64) ein erster Tristate-Pufferspeicher (70) in den Adressen-/Datenbus (90) zwischen die Festspeicherbank (68) und die Mikroprogrammablaufsteuerung (64) eingesetzt ist bzw. ein zweiter Tristate-Pufferspeicher (72) zwischen Ausgänge der programmierbaren Festspeicher und einem Dateneingang (D) der Mikroprogrammablaufsteuerung (64) geschaltet ist und daß ein Inverter (92) zum ausschließlichen Freigeben des ersten Tristate-Pufferspeichers (70) oder des zweiten Tristate-Pufferspeichers (72) zwischen deren Freigabeeingänge geschaltet ist.

5. Geräteanschlußschaltung(10) nach einem der Ansprüche 2 bis 4, dadurch gekennzeichnet, daß die Geräteschnittstelle (12) ein erstes Flipflop (84), einen ersten (80) und einen zweiten Multiplexer (82) und eine Dekodier-und Signalspeicherlogik (74) aufweist, daß das erste Flipflop - (84) einerseits mit dem Gerätebus (14) zum Überwachen dessen Betriebszustandes und andererseits mit dem ersten Multiplexer (80) verbunden ist, daß der erste Multiplexer - (80) und der zweite Multiplexer (82) untereinander und mit dem Rechen-und Steuerwerk (62) und der zweite Multiplexer (82) mit der Mikroprogrammablaufsteuerung (64) verbunden sind und daß die Dekodier-und Signalspeicherlogik - (74) mit der geräteunabhängigen (20) und der gerätespezifischen Programmspeichereinheit (22) verbunden ist und Freigabesignale zum Notizblockspeicher (66) und zum Gerätebus (14) überträgt.

6. Geräteanschlußschaltung (10) nach Anspruch 5, dadurch gekennzeichnet, daß die Speicher-und Mikrocomputerschnittstelle (16) ein zweites Flipflop (86), den ersten und den zweiten Multiplexer (80) bzw. (82) und die Dekodier-und Signalspeicherlogik (74) aufweist, daß das zweite Flipflop (86) einerseits mit der Kanalabrufleitung (44) zum Überwachen des Mikrocomputers (18) und andererseits mit dem ersten Multiplexer (80) verbunden ist und daß die Dekodier-und Signalspeicherlogik (74) mit dem Speicher - (30) und dem Mikrocomputer (18) zum Übertragen von Freigabesignalen verbunden ist.

FIG. 1

FIG. 2